**Europäisches Patentamt**

**European Patent Office**

**Office européen des brevets**

(11) Publication number: **0 003 869**

A1

(12) **EUROPEAN PATENT APPLICATION**

(21) Application number: **79300105.8**

(22) Date of filing: **22.01.79**

(51) Int. Cl.²: **F 16 J 3/04**
**F 16 J 15/52**

(30) Priority: **27.02.78 US 881267**

(43) Date of publication of application:
**05.09.79 Bulletin 79/18**

(84) Designated contracting states:
**DE FR GB**

(71) Applicant: **Caterpillar Tractor Co.**
**100 N. E. Adams Street**
**Peoria, Illinois 61629(US)**

(72) Inventor: **Kohler, Ramon Charles**
**7 Denham Drive**
**Aurora Illinois 60538(US)**

(74) Representative: **Jackson, Peter Arthur et al,**
**GILL JENNINGS & EVERY 53 to 64, Chancery Lane**
**London WC2A 1HN(GB)**

(54) **Expansible bellows.**

㊗ A composite bellows comprises a first section 15 having a larger diameter than a second section (17) connected thereto so that relative axial expansion and/or contraction of the two sections upon axial expansion and contraction of the composite bellows maintains a substantially constant internal volume within the composite bellows.

Fig. 1

EP 0 003 869 A1

- 1 -

CATERPILLAR TRACTOR CO. GJE/5078/382

<u>EXPANSIBLE BELLOWS</u>

This invention relates to an expansible bellows of the type adapted to form a seal between a pair of members which reciprocate relatively to one other.

A cable actuated control rod requires the use of a seal between the rod and a support member in which the rod is reciprocally mounted. The seal primarily functions to prevent the ingress of dirt particles or the like. A bellows type seal is often employed and requires ballooning thereof upon reciprocation of the rod or a vent hole formed through the bellows to communicate ambient air internally thereof when opposite ends of the bellows are secured to the rod and support member, respectively.

Ballooning of the bellows subjects it to undue wear and a relatively short fatigue life. In addition, the bellows must be formed out of a relatively thin and stretchable material, such as rubber, which is prone to premature failure. The formation of a hole through the bellows, although overcoming the ballooning problem, has the disadvantage of allowing dirt particles or the like to enter the bellows. In addition, should the hole become plugged, the bellows will become subjected to the above-discussed ballooning.

A slidable mounting of the rod through an end of the bellows also gives rise to problems. For example, such an arrangement does not provide a positive seal as between the rod and the bellows and any paint, dirt or corrosion, collected on the rod, may tend to work past the sliding seal and enter within the bellows proper. In addition, the resulting drag on the rod will lower the working efficiency of the rod and associated cable.

In accordance with the invention, an expansible composite bellows comprises two bellows of different effective cross sectional areas connected together end to end and defining a chamber for retaining a volume of fluid therein, whereby upon relative axial movement of the other ends of the two bellows the lengths of both bellows can change to maintain the volume of the chamber substantially constant.

With this arrangement, axial expansion of one bellows can be compensated by axial expansion or contraction of the other bellows without ballooning to maintain the volume of the chamber substantially constant, thereby avoiding the need for any vent hole in the bellows.

The bellows may extend in opposite directions from their connected ends or one bellows may be disposed radially inwardly and within the other bellows.

Two examples of composite bellows constructed in accordance with the invention are illustrated in the accompanying drawings, in which:-

Figure 1 is an axial section through one example shown in its expanded condition of operation;

Figure 2 is an elevation illustrating the Figure 1 bellows in a contracted condition of operation;

Figure 3 is a section similar to Figure 1, but illustrated the second example shown in its expanded condition of operation; and,

Figure 4 is a section similar to Figure 3 but shows the composite bellows in its contracted condition of operation.

- 3 -

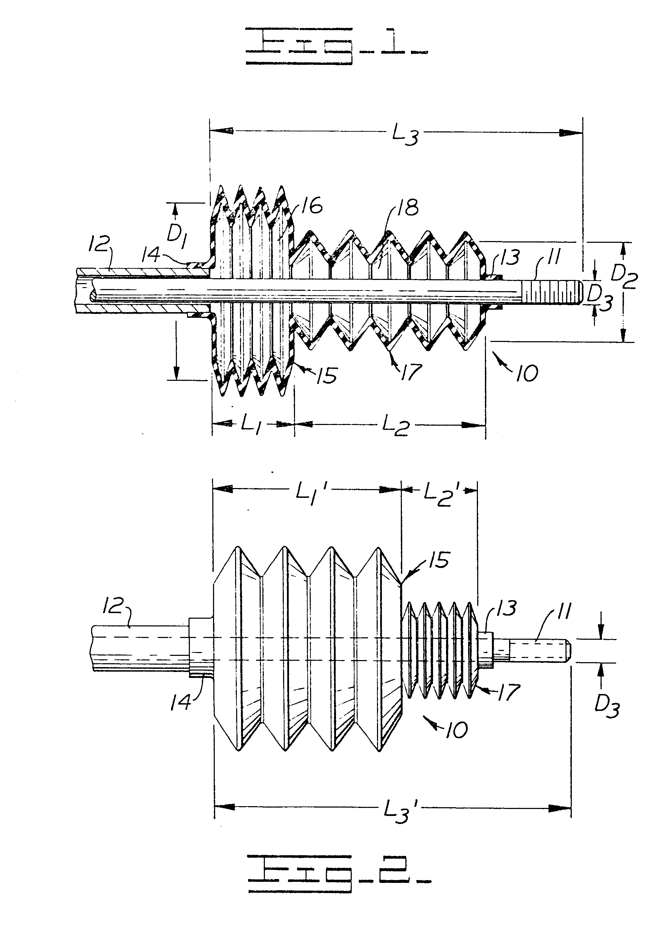

Figure 1 illustrates an expansible composite bellows 10 having opposite ends thereof secured to a rod 11, extending centrally through the bellows, and a tubular support member 12, having the rod reciprocally mounted therein. A screw threaded end of the rod may be suitably connected in a conventional manner to a standard push-pull cable control employed for the actuation of brakes, transmission controls or the like. Annular flanges 13 and 14, formed on opposite ends of the composite bellows, are adhesively or otherwise suitably secured to the rod and support member. For example, each flange may be secured in place by a standard band clamp.

The composite bellows, adapted to be filled with a fluid such as air, comprises a first bellows section 15 defining a first chamber 16 for retaining a first volume of air therein, and a second bellows section 17 connected in tandem to the first bellows section and defining a second chamber 18 for retaining a second volume of air therein. As described hereinafter, bellows sections 15 and 17 cooperate with each other for retaining the same total volume of air in the bellows upon both axial expansion and contraction thereof.

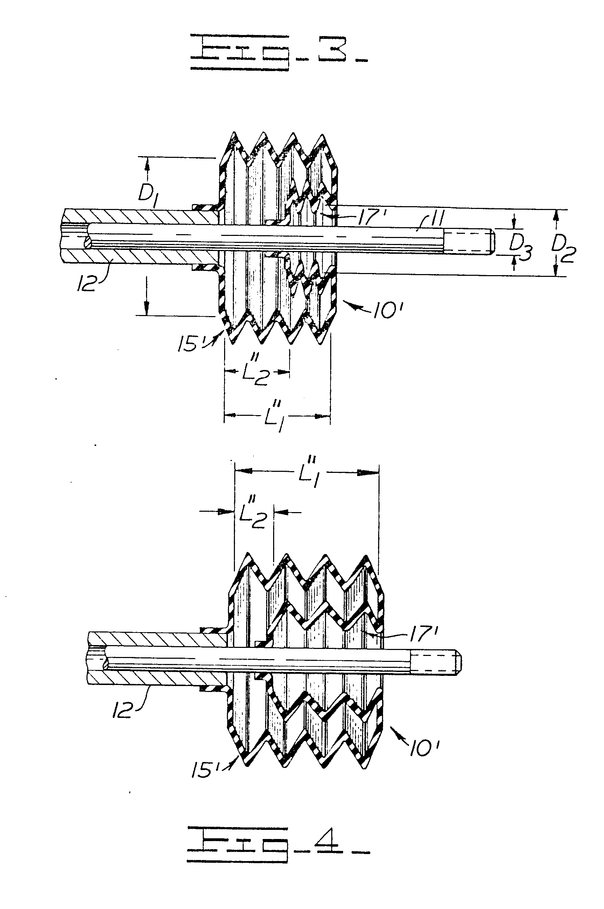

The bellows may be composed of any suitable elastomeric material such as rubber or plastic or may be composed of other materials such as stainless steel. The bellows is suitably pleated, as shown, to expand and contract between its Figures 1 and 2 conditions of operation. As further shown, the diameter of bellows section 15 is substantially greater than that of bellows section 17.

In operation and with the bellows assuming its expanded condition illustrated in Figure 1, the composite volume of air contained in the bellows (the first volume in chamber 16 plus the second volume in chamber 18) may be computed by the formula;

$$V = \pi (D_1/2)^2 L_1 + \pi (D_2/2)^2 L_2 - \pi (D_3/2)^2(L_1+L2)$$

wherein:

$V$ = composite volume of the bellows

$D_1$ = the effective diamter of bellows section 15

$L_1$ = the axial length of bellows section 15

$D_2$ = the effective diameter of bellows section 17

$L_2$ = axial length of bellows section 17

$D_3$ = outside diameter of rod 11

The term "effective diameter" of a particular segment of the bellows may be defined as the diameter of a cylinder which would displace the same amount of air per unit length as the segment of the bellows.

Upon contraction of the bellows to its Figure 2 condition, upon leftward movement of rod 11, bellows section 15 will expand axially in a first (rightward) direction in response to axial movement of the righthand end of the bellows section 17 in a second (leftward), opposite direction. The same total volume of air in the bellows may be computed by the following formula:

$$V = \pi (D_1/2)^2 L'_1 + \pi (D_2/2)^2 L'_2 - \pi (D_3/2)^2 (L'_1 + L'_2)$$

It should be noted that $L_3 - L'_3 = L_1 + L_2 - L'_1 - L'_2$ will define the stroke of rod 11 and that diameters $D_1$, $D_2$ and $D_3$ will remain substantially constant upon both expansion and contraction of the bellows. Thus, no "ballooning" of the bellows will result, nor is any hole required through the bellows to communicate ambient air internally thereof. Upon contraction of the bellows, the air displaced from the bellows section 17 will be displaced into the bellows section 15 with the procedure reversed upon subsequent expansion of the bellows.

Thus, the bellows will be fully and continuously sealed at the flanges 13 and 14 to the rod 11 and the support member 12, respectively, and the bore formed in

- 5 -

the support member 12 to receive slidably the rod 11 is fully shielded against ambient dirt particles and the like.  Also, since the flange 13 of the bellows is secured to the rod 11 to move therewith, no relative sliding occurs therebetween to give rise to inefficient drag problems on the cable control nor the flaking-off of paint, rust, or the like,into the bellows.  Furthermore, the bellows 10 may be constructed of a relatively heavy-duty material having a thick section throughout whereby the fatigue life of the bellows is greatly increased over conventional ones.

Figures 3 and 4 illustrate a modification 10' of the composite bellows wherein identical numerals are used to depict corresponding parts of the first example. In this embodiment, a second bellows section 17' is disposed radially inwardly and within a first bellows section 15' and has its open end exposed to ambient. Similar to the Figures 1 and 2 embodiment, bellows section 15' has an effective diameter substantially larger than that of second bellows section 17'.

In operation,the first bellows section 15' will expand axially in a first (rightward) direction in response to axial movement of the left hand end of the second bellows section 17' in a second (leftward), opposite direction, as shown in Figures 3 and 4.  Bellows 10' thus functions similarly to bellows 10 and in substantial accordance with the above-discussed volumetric equations as modified as follows:

$$V = \pi (D_1/2)^2 L''_1 - \pi (D_2/2)^2 (L''_1 - L''_2) - \pi (D_3/2)^2 L''_2$$

The primary difference in  their respective functions is that when rod 11 is moved from its Figure 3 to its Figure 4 position, the volume displaced in the segment of bellows section 15' having length $L_2$ by bellows section 17' may be considered as being subtracted from rather than added to the volume of fluid originally contained therein. However, it should be understood that the total volume of fluid (air) contained in the bellows remains the same upon both expansion and contraction thereof.

C L A I M S

1. An expansible composite bellows characterised by two bellows (15,17) of different effective cross sectional areas connected together end to end and defining a chamber (16,18) for retaining a volume of fluid therein, whereby upon relative axial movement of the other ends of the two bellows the length of both bellows can change to maintain the volume of the chamber substantially constant.

2. A composite bellows according to claim 1, wherein the other ends of the two bellows are secured to a rod (11) and a support member (12), respectively, the rod being reciprocally mounted in the support member and extending axially through the bellows.

3. A composite bellows according to claim 2, wherein a pair of annular flanges (13,14) are formed on the other ends of the two bellows and are secured to the rod and to the support member, respectively.

4. A composite bellows according to any one of the preceding claims, wherein each bellows is pleated and is composed of an elastomeric material.

5. A composite bellows according to any one of the preceding claims, wherein the two bellows each have a circular cross section and their diameters remain at least substantially constant upon expansion and contraction.

6.      A composite bellows according to any one of the preceding claims, wherein the two bellows extend in opposite directions from their connected ends (Figures 1 and 2).

7.      A composite bellows according to any one of claims 1 to 5, wherein one of the bellows is disposed radially inwardly and within the other bellows (Figures 3 and 4).

0003869

Fig-1-

Fig-2-

**FIG. 3.**

**FIG. 4.**

0003869

Application number

## EUROPEAN SEARCH REPORT

European Patent Office

EP 79 300 105.8

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | <u>DE - U - 7 030 176</u> (OPEL) <br> *claims 1 and 3; fig. 1 and 3* <br> -- | 1,2,3, 4,5,6 | F 16 J 3/04 <br> F 16 J 15/52 |
| X | <u>US - A - 3 442 096</u> (GLAENZER SPICER) <br> *claims 1 and 2; fig.* <br> & DE - B - 1 300 386 <br> -- | 1,2,3, 4,5,6 | |
| | <u>DE - A - 1 905 374</u> (BABCOCK) <br> *claims 1; fig. 2* <br> -- | 1,2,4, 7 | **TECHNICAL FIELDS SEARCHED (Int.Cl.²)** |
| A | <u>DE - B - 1 212 372</u> (TEVES) <br> *whole document* <br> -- | | F 16 J 3/00 <br> F 16 J 15/00 |
| A | <u>US - A - 4 058 018</u> (QUADRASTAT) <br> *whole document* | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 04-05-1979 | MASSALSKI |

EPO Form 1503.1  06.78